(19) Europäisches Patentamt
European Patent Office
Office européen des brevets

(11) **EP 4 068 437 A1**

(12) **EUROPEAN PATENT APPLICATION**

(43) Date of publication:
**05.10.2022 Bulletin 2022/40**

(21) Application number: **21166703.5**

(22) Date of filing: **01.04.2021**

(51) International Patent Classification (IPC):
*H01M 8/04029* (2016.01)    *H01M 8/04007* (2016.01)
*H01M 8/0432* (2016.01)    *H01M 8/04701* (2016.01)
*H01M 8/04746* (2016.01)    *H01M 8/0206* (2016.01)

(52) Cooperative Patent Classification (CPC):
**H01M 8/04358; H01M 8/0206; H01M 8/04029;**
**H01M 8/04074; H01M 8/04723; H01M 8/04768**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **VOLVO TRUCK CORPORATION**
**405 08 Göteborg (SE)**

(72) Inventors:
• **BLOMGREN, Fredrik**
 **. HISINGS KÄRRA (SE)**
• **LUONG, Staffan**
 **. GÖTEBORG (SE)**
• **KARLSSON, Stina**
 **. GÖTEBORG (SE)**

(74) Representative: **Kransell & Wennborg KB**
**P.O. Box 2096**
**403 12 Göteborg (SE)**

(54) **COOLANT SYSTEM FOR A FUEL CELL SYSTEM**

(57)    The disclosure relates to a coolant system (100) for a fuel cell, comprising a fluid circuit (60) for transporting coolant and a heat exchanger (70) disposed in said fluid circuit for regulating the temperature of the coolant, wherein said fluid circuit comprising a plurality of coolant channels (62a, 62b) forming a parallel coolant-channels configuration for transporting the coolant over a portion of a bipolar plate (80), the plurality of coolant channels having corresponding coolant inlets to the fuel cell and corresponding coolant outlets from the fuel cell, and wherein the corresponding coolant inlets are arranged in fluid communication with the heat exchanger and the corresponding coolant outlets are arranged in fluid communication with the heat exchanger.

Fig. 3

**Description**

TECHNICAL FIELD

The present disclosure relates to a coolant system for a fuel cell system and to a fuel cell system provided with such a coolant system. The present disclosure may typically be applied in a fuel cell system used as a part of an electric driveline of heavy-duty vehicles, such as trucks, buses, and construction equipment. The present disclosure may likewise be applied in other vehicles such as cars and other light-weight vehicles etc., but also in marine vessels and the like. Other applications are also possible, such as the application of the present disclosure in a stationary power plant system.

BACKGROUND

In the field of fuel cell systems, there is an increasing demand for improving the efficiency of handling heat generated in the fuel cells during operation of the fuel cell system. To this end, the fuel cell system generally includes a coolant system with the purpose of maintaining the operating temperature of the fuel cell stack at its optimal temperature. Currently, there is a number of different cooling techniques used in fuel cells, including the use of air and liquid cooling media or phase change. In the field of fuel cell systems for vehicles, typically using high power fuel cell stacks, the coolant system is generally provided in the form of a liquid coolant system since the heat transfer coefficients for liquid flow are typically higher compared to air flow.

In these types of liquid coolant systems for vehicle fuel cell systems, the coolant flow paths may generally also be integrated in the bipolar plates of the fuel cells. However, the coolant may also flow in other ways within the fuel cell stack.

US 6,461,754 B1 discloses one example of a coolant circulation circuit for a solid polymer electrolyte fuel cell using e.g. hydrogen as one of the fuel components. The coolant circulation circuit comprises an open-faced coolant flow channel formed in a major region of a surface of a coolant flow field plate. Further, the open-faced coolant flow channel is divided into a plurality of divisional passages. Also, there is a coolant inlet port at one end of each of the divisional passages and a coolant outlet port at the other end of each of the divisional passages.

Despite the activity in the field, it would be desirable to further improve the efficiency of the cooling operation of the fuel cell system.

Furthermore, in the field of heavy-duty vehicles, such as trucks, the coolant system of the fuel cell system is generally arranged to transfer heat from the cooling circuit of the coolant system to the ambient air via a radiator. For this reason, the radiators in vehicle fuel cell systems are currently rather large in dimension due to the relatively small temperature difference between the fuel cell system and the ambient air.

Hence, it would also be desirable to improve the overall efficiency of a fuel cell system so as to allow for reducing the demands on the radiator of the vehicle.

SUMMARY

An object of the invention is to provide an improved operation of a fuel cell system, in which heat generated during e.g. high-load operation of the fuel cells can be managed in an efficient, yet reliable manner. The object is at least partly achieved by a system according to claim 1.

According to a first aspect of the disclosure, there is provided a coolant system for a fuel cell arrangement. The coolant system comprises a fluid circuit for transporting coolant and a heat exchanger disposed in the fluid circuit for regulating the temperature of the coolant. In addition, the fluid circuit comprises a plurality of coolant channels forming a parallel coolant-channels configuration for transporting the coolant over a portion of a bipolar plate. Moreover, the plurality of coolant channels comprises corresponding coolant inlets to the fuel cell arrangement and corresponding coolant outlets from the fuel cell arrangement, respectively. Further, the corresponding coolant inlets are arranged in fluid communication with the heat exchanger and the corresponding coolant outlets are arranged in fluid communication with the heat exchanger.

In this manner, there is provided a coolant system capable of increasing the mass flow of the coolant flow upstream the inlets of the plurality of coolant channels so as to allow for operating the fuel cell system (and coolant system) with an increased coolant inlet temperature at the inlets to the channels, while not exceeding the outlet target temperature, thereby increasing the efficiency of the fuel cell. In other words, the parallel coolant-channels configuration of the coolant system allows for operating the fuel cell at an average (along the flow paths of the coolant channels) higher temperature because it becomes possible to allow a higher FC-inlet temperature. In this context, it should be readily appreciated that the amount of heat that must be transported from the fuel cell arrangement to the coolant is invariant of the number of coolant channels. Further, the heat transport rate along the flow path is directly dependent on the mass flow. The exemplary advantage of facilitating an increase of the mass flow can be appreciated from an example for one channel, in which the mass flow for one channel may be denoted as $m1$ in order to achieve the required heat transport rate. Hence, in a fuel cell arrangement with N coolant channels over the bipolar plate, it would be necessary to have a total mass flow of $N*m1$ in order to transport all the heat. That is, the total mass flow must be $N*m1$ so that the mass flow in each channel is $m1$.

In addition, the coolant temperature demand will be decreased, and the fuel cell efficiency will be increased, which allows for reducing dimensions of the heat-exchanger (i.e. the radiator of the vehicle). Further, due to the increased efficiency in cooling of the fuel cell, there may also be at least a slightly reduced cooling demand of the system. That is, the generated heat from the fuel cell system may generally need to be handled by the radiator (heat exchanger) of the vehicle. As the radiator of the vehicle typically is one of the bottle necks for heat transfer, a reduction in cooling demand as mentioned above will allow for reducing the size of the radiator. To this end, the arrangement of the coolant system provides for an improved cooling efficiency without increasing the effective area of the heat exchanger downstream the outlets of the at least two coolant channels.

Moreover, the parallel coolant-channels configuration contributes to an improved fuel efficiency in that the temperature difference between the temperature at the inlet and the temperature at the outlet of each one of the coolant channels can be reduced. This advantage is at least partly provided by having a parallel coolant-channels configuration in which each one of the plurality of coolant channels comprises corresponding coolant inlets and corresponding coolant outlets and that the corresponding coolant inlets are arranged in fluid communication with the heat exchanger and the corresponding coolant outlets are arranged in fluid communication with the heat exchanger. To this end, it should be noted that there is a correlation between fuel efficiency and the fuel cell temperature. Namely, at low temperatures, the fuel efficiency is generally lowered due to slow chemical kinetics which increases activation losses. An increase in the temperature may typically mitigate this problem up to a balance point (which typically corresponds to the optimal temperature in the cooling channels). However, when raising the temperature further beyond this balance point, it has been appreciated that proton transport in the membrane may typically start to be negatively affected due to drying of the membrane.

Further, in more conventional arrangements of coolant flow paths of a bipolar plate, the coolant typically enters at an inlet and follows a certain path, and subsequently exits at an outlet. The present disclosure is at least partly based on the insight of finding a balance between the inlet and outlet temperatures of the coolant path in the fuel cell system. In order to facilitate the coolant working properly and transporting heat from the fuel cell, the inlet temperature may normally be required to be set to a lower value than the optimal temperature. This means that the temperature in the region of the bipolar plate closest to the coolant inlet will be lower than the optimal temperature. Hence, there will be a region of the bipolar plate that does not work at the optimum. While raising the inlet coolant temperature may mitigate the problem of having a low temperature, i.e. a low fuel efficiency, in the region near the coolant inlet, this may also increase the temperature near the coolant outlet, which will decrease fuel efficiency in that region. Furthermore, it has also been observed that operating the fuel cell at a higher temperature may generally increase the rate of ageing rate of the fuel cell. While some prior art system may provide an improved control of the thermal management of the fuel cell system by attempting to obtain a target temperature at the coolant outlet that is close to the optimal temperature, such system may also result in having a region of the bipolar plate operating at non-optimal conditions.

In view of the above, the present disclosure provides for an improved thermal management by avoiding an undesirable low coolant inlet temperature in that each one of the plurality of coolant channels comprises corresponding coolant inlets to the fuel cell and corresponding coolant outlets from the fuel cell. In this manner, it becomes possible to operate the coolant system with a higher coolant temperature at the inlets without exceeding the optimal temperature at the outlets. Hereby, the temperature of the bipolar plate can be operated closer to the optimal temperature value and will also be more evenly distributed over the bipolar plate surface. The coolant system according to the various arrangement described herein may therefore also contribute to an increased fuel efficiency without increasing the rate of ageing of the fuel cell system.

In addition, by providing a coolant system according to the above configuration, it may become possible to downrate the size of the heat exchanger of the fuel cell system, at least to some extent. To this end, the present disclosure may not only have a positive impact on the possibility of reducing the size of the fuel cell system due to a more efficient thermal management and coolant system, but also on the overall manufacturing costs for the fuel cell system. While the present disclosure may be used in any type of fuel cell system including one or more bipolar plates and a coolant system for cooling thereof, the present disclosure is particularly useful for a fuel cell system incorporated into a vehicle, such as a heavy-duty vehicle. In these types of installations, the process pf optimizing the heat transfer through the coolant channels configuration in a fuel cell stack may often be a complex matter and an expensive task in terms of manufacturing. Accordingly, there is a need to provide an improved coolant system design with enhanced thermal management over the conventional art.

Typically, the fuel cell system comprises the bipolar plate cell portion, which is part of a bipolar plate. Hence, the fuel cell system may typically comprise at least one bipolar plate. A bipolar plate is a well-known component of a fuel cell system and may generally refer to a part of the fuel cell which guides the coolant and fuel ($H_2$ and $O_2$) flows. More specifically, a bipolar plate is configured to evenly distribute the fuel and the oxidant to the cells of the fuel cell. Bipolar plates are also configured to collect the generated electric current at the output terminals. In addition, the bipolar plate generally provides for additional functionality such as distributing fuel and oxidant inside the cells, maintaining a separation of the different cells, collecting the electric current produced, evacuating water from each cell, but also cooling of the cells. Typically, bipolar plates may be made of graphite or metal. Besides that the bipolar plate may interact with the arrangement of coolant channels and/or include the integrated arrangement of the coolant channels, the bipolar plate may generally also comprise separate fuel and oxidant channels which allow for the passage of reactants (fuel and oxidant) on each side. These fuel and oxidant channels form the anode and cathode compartments on opposite sides of the bipolar plate. The arrangement and design of these fuel and oxidant flow channels may vary depending on the design and use of the fuel cell system. By way of example, the fuel and oxidant channels may be provided in the form of linear, coiled, parallel, comb-like or evenly spaced channels, as is commonly known in the art.

The fluid circuit may typically be configured to define a fluid passageway for circulating the coolant therethrough. The fluid circuit, including the coolant channels, can be provided in several different manners. Typically, the coolant channels are an integral part of the bipolar plate. According to one example embodiment, the coolant channels are arranged on the surface of the bipolar plate. Hence, the coolant channels are generally arranged on opposite surfaces of the bipolar plate so as to provide thermal management in-between two fuel cells (such as two PEM). By way of example, the coolant channels may be completely integrated in the bipolar plate during manufacturing of the bipolar plate. In addition, or alternatively, the coolant channels may be provided as defined tubes, hoses or the like. In addition, or alternatively, the coolant channels may be provided in the form of a predetermined surface pattern of the bipolar plate, such as a corrugated or wave-formed pattern surface configured to define grooves corresponding to the coolant channels.

It should be noted that each one of the plurality of coolant channels defines corresponding coolant flow paths. The coolant channels may vary in respect to channel geometry. By way of example, each one of the coolant channels may be arranged in any one of a parallel, serpentine, and parallel-serpentine arrangement. However, each one of the coolant channels generally comprises a corresponding coolant inlet and a corresponding coolant outlet, respectively, as mentioned above. The flow path of each one of the coolant channels may generally also be designed to reduce the generated heat across the entire working voltage range of the fuel cell and to contribute to a more uniform temperature distribution within the active area of the cell.

Also, it should be noted that the coolant system typically contains the coolant. The coolant channels are adapted to contain and transfer portions of the coolant for regulating the temperature of the bipolar plate and thus the temperature of the fuel cell. By way of example, the coolant is a liquid, such as deionized water or an antifreeze coolant for operation during sub-zero conditions.

By the parallel coolant-channels configuration comprising the plurality of coolant channels with corresponding coolant outlets connected to the heat exchanger, there is provided a coolant system in which portions of coolant flow from each one of the coolant outlets to the heat exchanger without being transported through another one of the coolant channels. In a similar vein, by the parallel coolant-channels configuration comprising the plurality of coolant channels with corresponding coolant inlets in fluid communication with the heat exchanger, there is provided a coolant system in which portions of coolant flow from the heat exchanger to each one of the coolant inlets without being transported through another one of the coolant channels. Such arrangement may thus not need any intermediate heat exchanger in-between two coolant channels. In other words, the coolant system according to the above arrangements allows for using one and the same heat exchanger for all coolant channels. Thus, the coolant channels are in fluid communication with a single heat exchanger, only.

The term "fluid communication" may generally refer to direct fluid communication, for example, a coolant outlet (or coolant inlet) of a cooling channel and the heat exchanger can be in fluid communication with each other via an unobstructed fluid passageway connecting the coolant outlet (or coolant inlet) and the heat exchanger or can be capable of being in fluid communication, for example, a coolant outlet (or coolant inlet) of a cooling channel and the heat exchanger can be capable of fluid communication with each other when they are connected via a fluid passageway that can comprise a coolant flow controller device (valve) disposed therein, wherein fluid communication can be established between the coolant outlet (or coolant inlet) of the cooling channel and the heat exchanger upon actuating the valve, e.g. opening a valve disposed in the fluid passageway. Hence, according to one embodiment, each one of the coolant outlets is in direct fluid communication with the heat exchanger. Analogously, each one of the coolant inlets may be in direct fluid communication with the heat exchanger.

According to at least one embodiment, each one of the corresponding coolant inlets is individually arranged in fluid communication with the heat exchanger. In this context of the disclosure, the term "individually arranged in fluid communication" refers to an arrangement where a portion of coolant flows from the heat exchanger to each one of the coolant inlets. Analogously, each one of the corresponding coolant outlets may be individually arranged in fluid communication with the heat exchanger. Hence, in this arrangement, a portion of coolant flows from each one of the coolant outlets to the heat exchanger.

According to at least one embodiment, the coolant system further comprises coolant flow control system arranged to regulate the coolant mass flow to the parallel coolant-channels configuration. By way of example, the flow control system comprises at least one flow controller disposed in the fluid circuit upstream relative to at least one of the coolant inlets of a corresponding coolant channel and a pump disposed in the fluid circuit upstream of the flow controller. The pump is configured to increase the coolant velocity and to pump the coolant through the fluid circuit, including pumping the coolant through the coolant channels of the parallel coolant-channels configuration.

Typically, although strictly not necessary, the coolant flow control system comprises a plurality of flow controllers disposed in the fluid circuit upstream of the corresponding coolant inlets of the coolant channels, respectively, and the pump is disposed in the fluid circuit upstream of the plurality of flow controllers. Hereby, the flow control system is configured to control the coolant mass flow to each one of the coolant inlets of the coolant channels.

By way of example, when the parallel coolant-channels configuration comprises two coolant channels, the coolant system comprises first and second flow controllers arranged upstream of corresponding first and second inlets of the corresponding first and second coolant channels, respectively. The first flow controller is arranged to control the coolant mass flow to the first coolant inlet of the first coolant channel and the second flow controller is arranged to control the coolant mass flow to the second coolant inlet of the second coolant channel.

The flow controller is configured to control the coolant mass flow to an associated coolant inlet of a corresponding coolant channel. In this manner, it becomes possible to provide a coolant system in which the flow of coolant can be individually regulated in the coolant channels. By controlling the flow of coolant individually to each one of coolant channels it becomes possible to provide an increased cooling at the hydrogen gas inlet of the fuel cell and a reduced cooling at the hydrogen gas outlet of the fuel cell. Thereby, it becomes possible to provide a more homogenous catalyst charging along the hydrogen gas channels of the fuel cell. It should be readily appreciated that in this example, the coolant inlets and the fuel inlets are typically arranged at the same location in the fuel cell arrangement.

Typically, although strictly not necessary, the flow controller may be a control valve. Hence, the control valve is disposed upstream of an associated coolant inlet of a coolant channel. By way of example, the control valve may be a conventional non-return valve of the like. It should be readily appreciated that the actual flow may be controlled in cooperation with the pump and the control unit, such as the ECU, which is generally known in the art. Thus, according to one example embodiment, the coolant flow control system comprises the control valve and the pump, wherein the flow controller and the pump are controlled by the control unit for regulating the coolant mass flow to each one of the coolant inlets of the coolant channels. Hence, the control unit is arranged in communication with the coolant flow control system for regulating the coolant mass flow to the parallel coolant-channels configuration.

In addition, or alternatively, the coolant mass flow to each one of the coolant inlets of the coolant channels may be regulated based on a target coolant temperature at the coolant outlets of the coolant channels. The regulation of the mass flow based on the target coolant temperature may be performed by controlling the coolant flow control system and any one of the flow controllers. In addition, or alternatively, the regulation of the mass flow based on the target coolant temperature may be performed by controlling the coolant flow control system in response to an indication of the load on the fuel cell system. Data indicating the load of the fuel cell system may generally be gathered and determined by the control unit.

According to at least one embodiment, the coolant mass flow to each one of the coolant inlets of the coolant channels is controlled to be substantially equal. A coolant system in which the coolant mass flow to each one of the inlets of the coolant channels is controlled to be substantially equal can be provided by controlling the coolant flow control system.

According to at least one embodiment, the coolant mass flow to each one of the coolant inlets of the coolant channels is regulated such that the coolant mass flow is different for different coolant inlets.

In addition, or alternatively, the coolant mass flow to each one of the inlets of the coolant channels may be regulated based on the thermal energy capacity of the heat exchanger, as measured downstream the outlets of the coolant channels.

According to at least one embodiment, the parallel coolant-channels configuration intersects into a common return flow path to the heat exchanger. By way of example, the coolant channels intersect into a common return flow path to the heat exchanger. According to at least one embodiment, the coolant outlets intersect into a common return flow path the heat exchanger.

According to at least one embodiment, the coolant system further comprises the control unit adapted to control the coolant system in response to a temperature of the fuel cell arrangement. By way of example, the control unit control the coolant system by controlling the coolant flow control system. However, the coolant system can be controlled in several different manners, as mentioned above. The coolant system is typically controlled by a control unit, such as an ECU of the fuel cell system or the vehicle. The control unit may include a microprocessor, microcontroller, programmable digital signal processor or another programmable device. Thus, the control unit typically comprises electronic circuits and connections as well as processing circuitry such that the control unit can communicate with different parts of the fuel cell system such as the fuel cell stack, coolant system, heat exchanger, radiator, temperature sensors or any other component of the vehicle in order to provide the functions of the example embodiments. The control unit may comprise modules in either hardware or software, or partially in hardware or software and communicate using known transmission buses such as CAN-bus and/or wireless communication capabilities. The processing circuitry may be a general purpose processor or a specific processor. The control unit typically comprises a non-transitory memory for storing computer program code and data upon. Thus, the control unit may be embodied by many different constructions.

In other words, the control functionality of the example embodiments of the system may be implemented using existing computer processors, or by a special purpose computer processor for an appropriate system, incorporated for this or another purpose, or by a hardwire system. Embodiments within the scope of the present disclosure include program products comprising machine-readable medium for carrying or having machine-executable instructions or data structures stored thereon. Such machine-readable media can be any available media that can be accessed by a general purpose or special purpose computer or other machine with a processor. By way of example, such machine-readable media can comprise RAM, ROM, EPROM, EEPROM, CD-ROM or other optical disk storage, magnetic disk storage or other magnetic storage devices, or any other medium which can be used to carry or store desired program code in the form of machine-executable instructions or data structures and which can be accessed by a general purpose or special purpose computer or other machine with a processor. When information is transferred or provided over a network or another communications connection (either hardwired, wireless, or a combination of hardwired or wireless) to a machine, the machine properly views the connection as a machine-readable medium. Thus, any such connection is properly termed a machine-readable medium. Combinations of the above are also included within the scope of machine-readable media. Machine-executable instructions include, for example, instructions and data which cause a general purpose computer, special purpose computer, or special purpose processing machines to perform a certain function or group of functions. While the example embodiments of the system described above includes a control unit being an integral part thereof, it is also possible that the control unit may be a separate part of the vehicle, and/or arranged remote from the system and in communication with the system.

According to a second aspect of the present disclosure, there is provided a fuel cell arrangement for an electric vehicle, comprising a bipolar plate and a coolant system according to the first aspect of the disclosure. The coolant system is arranged to cool the fuel cell arrangement, e.g. to cool at least a part of the bipolar plate. Effects and features of this second aspect of the present disclosure are largely analogous to those described above in connection with the first aspect of the disclosure. Embodiments mentioned in relation to the first aspect of the present disclosure are largely compatible with the second aspect of the disclosure.

According to at least one embodiment, the fuel cell arrangement comprises a polymer electrolyte membrane (PEM) fuel cell. In this example embodiment, the bipolar plate is arranged in connection to the PEM. In this manner, the coolant system is arranged to transfer heat from the PEM fuel.

According to a third aspect of the present disclosure, there is provided a fuel cell stack comprising a number of fuel cell arrangements according to the first aspect of the disclosure, wherein the number of fuel cell arrangements are arranged in a stack configuration. Moreover, each one of the fuel cell arrangements comprises a corresponding coolant system. It may also be conceivable that the fuel cell arrangements comprises shared coolant system according to the above configurations. A fuel cell stack is a device that converts chemical potential energy into electrical energy. By way of example, the fuel cell stack is a Proton Exchange Membrane (PEM) fuel cell stack. A PEM fuel cell stack is particularly suitable for vehicles due to its energy conversion efficiency and package compactness. PEM fuel cells are configured to convert the energy potential of a hydrogen-based fuel into electricity with water and heat as the major by-products. PEM fuel cells may generally be constructed from a proton-conducting membrane. The membranes are coated with a thin layer of platinum-based catalyst and porous carbon electrode support material. The membrane is then sandwiched between the anode and cathode to form the membrane-electrode assembly (MEAs), which is generally considered as an individual fuel cell. The MEAs are connected in series to provide the desired voltage and power output required for the vehicle application, forming the fuel cell stack together with one or more bipolar plates. Effects and features of this third aspect of the present disclosure are largely analogous to those described above in connection with the first and second aspects of the disclosure. Embodiments mentioned in relation to the first and second aspects of the present disclosure are largely compatible with the third aspect of the disclosure.

Hence, by way of example, the fuel cell stack may typically further comprise one or more polymer electrolyte membrane (PEM) fuel cells comprising a membrane, catalyst layers in form of anode and cathode layers, and gas diffusion layers, which together form the membrane electrode assembly of the PEM fuel cell. The anode layer is arranged on one side of the membrane and the cathode layer is arranged on the other side of the membrane. On the anode side, a platinum catalyst enables hydrogen molecules to be split into protons and electrons. On the cathode side, a platinum catalyst enables oxygen reduction by reacting with the protons generated by the anode, producing water. The ionomer mixed into the catalyst layers allows the protons to travel through these layers. Moreover, the gas diffusion layers are generally arranged outside the catalyst layers, respectively. The gas diffusion layers are arranged to facilitate transport of reactants into the catalyst layers and may typically be provided in the form of a sheet of carbon paper in which the carbon fibres are partially coated with polytetrafluoroethylene (PTFE). In addition, a first bipolar plate is disposed on a first side of the PEM and a second bipolar plate is disposed on a second side of the PEM, wherein at least one of the first and second bipolar plates comprises a first coolant system according to the first aspect of the disclosure. Typically, the other one of the first and the second bipolar plates comprises a second coolant system according to the first aspect of the disclosure.

In order to provide a gas-tight fuel cell stack, the fuel cell stack may further comprise end plates and/or gaskets around the edges of the PEM fuel cell arrangement.

According to a fourth aspect of the present disclosure, there is provided a bipolar plate comprising a coolant system according to any one of the example embodiments disclosed herein.

According to a fifth aspect of the present disclosure, there is provided a vehicle, preferably an electric vehicle, comprising a coolant system according to the first aspect of the disclosure. According to a sixth aspect of the present disclosure, there is provided a vehicle, preferably an electric vehicle, comprising a fuel cell arrangement according to the second aspect of the disclosure. Effects and features of the fourth, fifth and sixth aspects of the present disclosure are largely analogous to those described above in connection with the first, second and third aspects of the disclosure. Embodiments mentioned in relation to the first, second and third aspects of the present disclosure are largely compatible with the fourth, fifth and sixth aspects of the present disclosure.

According to a seventh aspect of the present invention, there is provided a method for controlling a coolant system according to the first aspect of the disclosure. Effects and features of this seventh aspect of the present disclosure are largely analogous to those described above in connection with the other aspects of the disclosure. Embodiments mentioned in relation to the other aspects of the present disclosure are largely compatible with these aspects of the disclosure. The method according to the example embodiments can be executed in several different manners. According to one example embodiment, the steps of the method are performed by the control unit during use of the fuel cell system of the vehicle. According to one example embodiment, the steps of the method are performed in sequence. However, at least some of the steps of the method can be performed in parallel.

Further advantages and advantageous features of the disclosure are disclosed in the following description and in the dependent claims. It should also be readily appreciated that different features may be combined to create embodiments other than those described in the following, without departing from the scope of the present disclosure.

The terminology used herein is for the purpose of describing particular examples only and is not intended to be limiting of the disclosure. As used herein, the singular forms "a", "an" and "the" are intended to include the plural forms as well, unless the context clearly indicates otherwise. It will be further understood that the terms "comprises" "comprising," "includes" and/or "including" when used herein, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this disclosure belongs. It will be further understood that terms used herein should be interpreted as having a meaning that is consistent with their meaning in the context of this specification and the relevant art and will not be interpreted in an idealized or overly formal sense unless expressly so defined herein.

BRIEF DESCRIPTION OF THE DRAWINGS

The above, as well as additional objects, features and advantages of the present disclosure, will be better understood through the following illustrative and non-limiting detailed description of exemplary embodiments of the present disclosure, wherein:

Fig. 1 is a side view of a vehicle comprising a fuel cell system according to an example embodiment of the present disclosure;

Fig. 2 is a cross-sectional view of a fuel cell arrangement comprising a bipolar plate and a coolant system according to an example embodiment of the present disclosure, in which the fuel cell arrangement can be incorporated into the fuel cell system of the vehicle illustrated in Fig. 1;

Fig. 3 schematically illustrates a number of bipolar plates oriented in a stack configuration so as to form parts of a fuel cell stack, and comprising a coolant system according to an example embodiment of the present disclosure, the coolant system having a fluid circuit extending across the number of bipolar plates;

Fig. 4 is a side view of one bipolar plate comprising a coolant system according to an example embodiment of the present disclosure;

Fig. 5 is a side view of one bipolar plate comprising a coolant system according to another example embodiment of the present disclosure.

DETAILED DESCRIPTION OF EXAMPLE EMBODIMENTS OF THE DISCLOSURE

The present disclosure will now be described more fully hereinafter with reference to the accompanying drawings, in which an exemplary embodiment of the disclosure is shown. The disclosure may, however, be embodied in many different forms and should not be construed as limited to the embodiment set forth herein; rather, the embodiment is provided for thoroughness and completeness. Like reference character refer to like elements throughout the description.

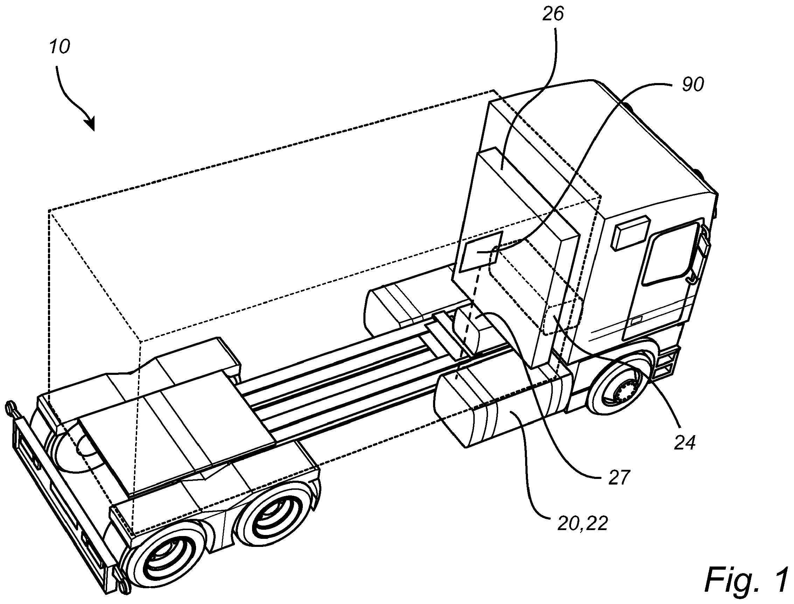

With particular reference to Fig. 1, there is provided a vehicle 10 in the form of a fuel cell electric vehicle (FCEV) comprising a fuel cell system 20 according to the present disclosure. The vehicle 10 depicted in Fig. 1 is a truck for which the fuel cell system 20, which will be described in detail below, is particularly suitable for.

Fig. 1 shows one example of some of components of the FCEV 10. The fuel cell system 20 comprises a fuel cell stack 22 arranged to generate electricity to propel the vehicle and to power auxiliary equipment. Hydrogen fuel is consumed in the fuel cell stack 22 of the fuel cell system 20 to produce electricity, with water (or water vapor) and heat as the major by-products. The FCEV 10 illustrated in Fig. 1 is configured in a series hybrid design where the fuel cell system is paired with a battery system (battery pack) 24. Besides the fuel cell stack 22, the FCEV 10 generally comprises an electric powertrain having an electric machine 27. In other words, a typical FCEV may also use traction batteries or capacitors, inverters, and electric motors for providing traction power to the vehicle.

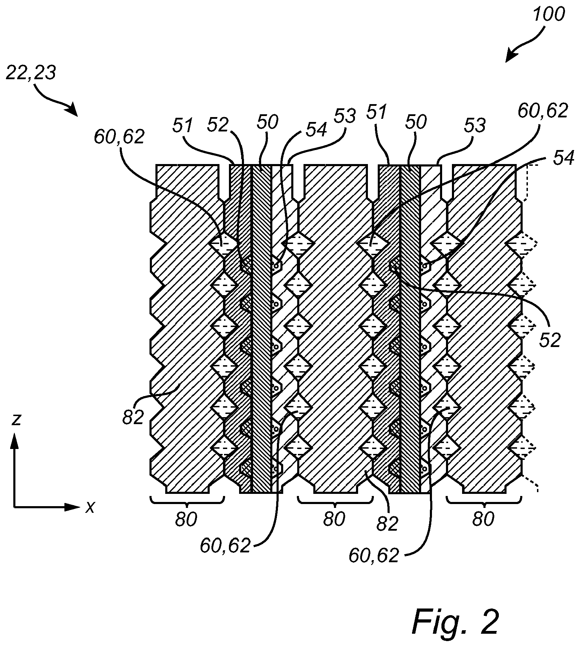

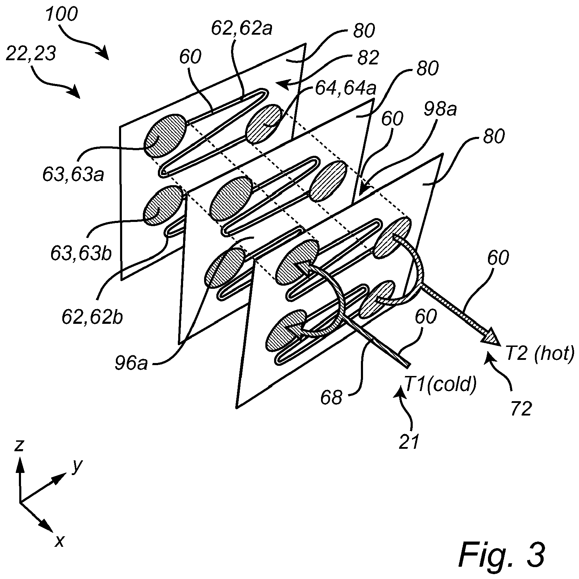

As indicated in Fig. 3, the fuel cell stack 22 has an extension in a longitudinal direction X, an extension in a transverse direction Y and an extension in a vertical direction Z. Fig. 2 is a cross-sectional view of parts of the fuel cell arrangement of the fuel cell stack 22 along the vertical direction Z and the transverse direction Y.

Turning again to Fig. 1, the FCEV 10 comprises a hydrogen storage system 26 for storing hydrogen to be used as a fuel component for operation of the fuel cell stack 22. The hydrogen storage system 26 is generally a pressure tank for storing pressurized hydrogen. In addition, the FCEV 10 may include an expander (not shown) for reducing the pressure of the hydrogen contained in the pressure tank, and a fuel supply line (not shown) for feeding the hydrogen from the pressure tank to the fuel cell stack 22 of the fuel cell system 20 via the expander. The FCEV may also include other components as is commonly known in the field of fuel cell systems, and thus not further described herein. Generally, the FCEV 10 comprises a so-called balance of plant (although not illustrated), which is a common term used within FCEVs that refers and encompasses typically all components of the fuel cell system except the fuel cell stack itself.

Traction power to the vehicle is delivered by the battery pack 24 and/or the fuel cell system 20. By way of example, the battery pack 24 is connected via converters to the electric motor that moves the vehicle, while the fuel cell system supplies energy to the electric motor and/or delivers power to the battery pack 24.

Turning now to Fig. 2, there is depicted an example of parts of the fuel cell system 20 in Fig. 1, which comprises the fuel cell stack 22. The fuel cell stack 22 comprises at least one fuel cell arrangement 23. Fig. 2 is a cross-sectional view of parts of the fuel cell arrangement 23. The fuel cell arrangement 23 in Fig.2 is a so-called Proton Exchange Membrane (PEM) fuel cell arrangement. A PEM fuel cell arrangement is particularly suitable for being used in vehicles such as the vehicle in Fig. 1, and may also form an integral part of the electric driveline for propulsion of the vehicle. The fuel cell arrangement 23 is configured to create electricity from two reactants, hydrogen 54 and oxygen 52, as partly indicated in Fig. 2. Similar to the operation of a battery, the fuel cell arrangement contains two electrodes, i.e. an anode 53 and a cathode 51. These electrodes are separated by a catalyst-coated membrane 50. Hydrogen 54, stored in the hydrogen storage system 26 (Fig. 1), enters one side of the fuel cell while air, containing needed oxygen 52, enters the other side (see Fig. 2). While the hydrogen molecules are transferred through the electrolyte in the fuel cell arrangement towards the oxygen, the molecules are separated into electrons and protons. The protons pass through the membrane 50 while the electrons move to the anode 53, generating electricity for the FCEV to use for tractive power and auxiliaries. When the electrons reach the cathode 51, the electrons recombine with the protons, react with the oxygen, and form water as the end-product.

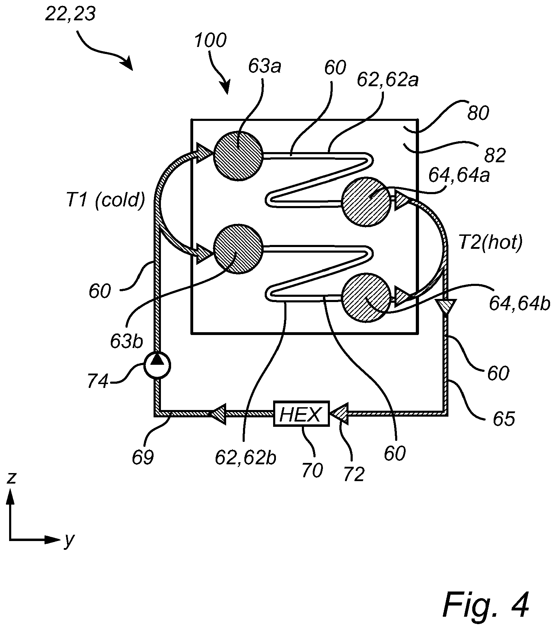

Further components of the fuel cell arrangement 23 will now be described with reference to Fig. 2 in conjunction with Figs. 3 and 4. In this example embodiment, the fuel cell arrangement 23 comprises at least one bipolar plate 80. Fig. 2 illustrates a cross-sectional view of the bipolar plate 80 together with additional components of the fuel cell arrangement 23, as mentioned above. In addition, the fuel cell arrangement 23 comprises a coolant system 100 according to an example embodiment of the present disclosure. Fig. 3 schematically illustrates a number of bipolar plates 80 oriented in a stack configuration so as to form parts of the fuel cell stack 22, while Fig. 4 is a side view of one bipolar plate 80 comprising the coolant system 100.

The bipolar plate 80 is configured to distribute fuel gas (hydrogen) and oxygen over its whole active surface area. Generally, the bipolar plates 80 are configured to conduct electrical current from the anode 53 of one cell to the cathode 51 of a consecutive cell. The bipolar plate 80 also joins together the anode 53 of one fuel cell arrangement to the cathode 51 of another fuel cell arrangement. The anode and cathode electrodes are typically composed of carbon paper or cloth. Moreover, the bipolar plate 80 provides electrical conduction between the cells and removes heat from the active areas. While bipolar plates may differ for different applications, the bipolar plates 80 are here made of graphite or stamped metal.

As may be gleaned from e.g. Fig. 2, each bipolar plate 80 is here designed with grooved fuel and oxidant channels to distribute the fuel (hydrogen) 54 and oxidant 52 separately to the anode 53 and cathode 51. The bipolar plates 80 further provides adequate support to the relatively thin membrane 50. Although not illustrated, it should also be appreciated that the fuel cell stack 22 here comprises conventional end plates that further support the stack 22 and a surrounding gasket to prevent the gases from escaping from between the bipolar plates 80.

The fuel cell stack 22 generally comprises one or more fuel cell arrangements 23. A fuel cell stack may generally comprise a high number of fuel cell arrangements, e.g. 100-300 cells connected in series. The fuel cell arrangement 23 is configured to generate electricity as mentioned above. Fuel efficiency of a fuel cell may be controlled by controlling any one of the pressure, temperature and relative humidity of the fuel (hydrogen) and air. In the context of the disclosure, however, it should be noted that both pressure and relative humidity are assumed to be such that a maximum efficiency is achieved. Turning to the temperature factor of the fuel cell system 20, the heat generated as a byproduct of the electrochemical reactions in the fuel cells must be transferred away from the fuel cells to maintain the desired temperature inside the fuel cells. The sensitivity of the solid polymer membrane to temperature typically requires that the thermal management of a PEM fuel cell stack operates efficiently to meet the high demands during operation of the vehicle. At least for these reasons, the fuel cell arrangement 23 further comprises the coolant system 100 configured for cooling of the active fuel cell components, mainly the bipolar plate and the EPM, as illustrated in Figs. 2 to 4. The coolant system 100 should be configured to maintain the operating temperature of the the fuel cell stack at its optimal, usually in the temperature range from 60 to 80°C.

As illustrated in Figs 3 and 4, the coolant system 100 comprises a fluid circuit 60 arranged in association with the fuel cell arrangement 23 so as to allow transfer of heat from the fuel cell arrangement 23 to a coolant 68 flowing through the fluid circuit 60. The fluid circuit 60 is a closed-loop circuit for recirculating the coolant 68. The coolant system 100 includes at least one part arranged to handle heat generated from the active fuel cell arrangement. In this example, the fluid circuit 60 contains a coolant 68 in the form of a liquid, such as deionized water or an antifreeze coolant for operation during subzero conditions, as is commonly known in the art. However, the coolant 68 may generally refer to any liquid that removes heat and provides corrosion inhibition. In Figs. 3 and 4, there is depicted one example embodiment of a coolant system 100 for a fuel cell system 20 according to the present disclosure. As illustrated in e.g. Fig. 4, the coolant system 100 here comprises the fluid circuit 60 for transporting coolant 68 and a heat exchanger 70 disposed in the fluid circuit 60 for regulating the temperature of the coolant 68. In other words, the fuel cell arrangement 23 generally also includes at least one heat exchanger 70 for cooling portions of the coolant 68 that have been heated by the fuel cells. The heat exchanger 70 is here a liquid-to-liquid heat exchanger. The heat exchanger 70 may e.g. be a liquid-liquid plate heat exchanger, but it may also be conceivable to use a liquid-gas heat exchanger. The heat exchanger 70 may generally be further arranged to dissipate the transferred heat to the ambient air via one or more additional thermal management components such as a radiator (not shown). In other words, the heat exchanger 70 is here the intermediate cooling device between the fuel cell stack and the radiator. Thus, the fuel cell stack 22 is here coupled to the heat exchanger 70 (liquid/liquid), which in turn is coupled to the radiator (liquid/air).

Alternatively, the heat exchanger 70 may be the radiator of the vehicle, which generally is a liquid-to-air heat exchanger. Hence, in this type of arrangement, the coolant is transferred directly to the radiator corresponding to the heat exchanger 70. Heat exchangers and radiators are commonly known in the field of fuel cell system, and thus not further described herein.

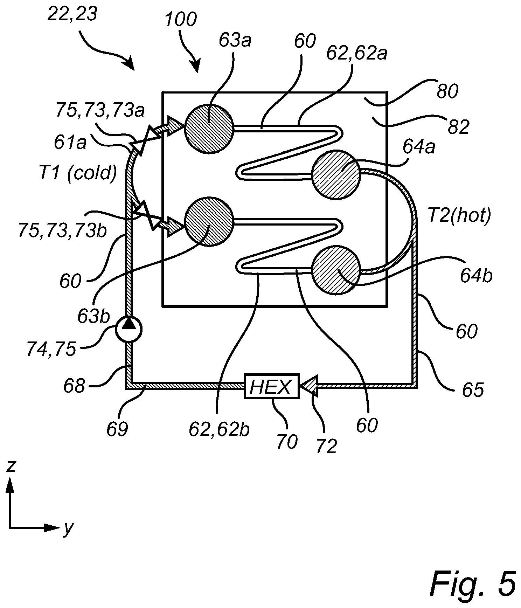

Typically, although strictly not required, the fuel cell arrangement 23 comprises a pump 74 (illustrated in e.g. Fig. 4) configured to recirculate the coolant 68 in the fluid circuit 60. By way of example, the pump is an electric centrifugal pump or the like, as is commonly used in automotive cooling system. The pump may be part of a coolant flow control system, as described further in relation to Fig. 5.

Turning now to Fig. 3, which schematically illustrates one example of the coolant system 100 arranged in the fuel cell arrangement 23. In this example, the fuel cell arrangement 23 comprises three bipolar plates 80 arranged in a series configuration. Although not illustrated in Fig. 3, the fuel cell arrangement 23 further includes the PEM 50, cathode 51 and anode 53 components, as described above in relation to Fig. 2, which are arranged in-between the bipolar plates 80. Fig. 3 illustrates an example of the coolant system 100, in which the fluid circuit 60 extends across the number of bipolar plates 80, which are arranged along the longitudinal direction. However, in some examples, the coolant system 100 may only extend through one single bipolar plate 80.

Accordingly, parts of the fluid circuit 60 extend at least partly through the fuel cell arrangement 23. As may be gleaned from Fig. 3, the arrangement of the fluid circuit 60 in the fuel cell arrangement 23 extends in the longitudinal direction X through three bipolar plates 80. Further, the fluid circuit 60 extends in the transverse direction Y and vertical direction Z in each one of the bipolar plates 80. In Figs. 2 to 4, each one of the bipolar plates 80 comprises parts of the fluid circuit 60 in the form of a number of coolant channels 62, e.g. a first cooling channel 62a and a second cooling channel 62b, which are arranged to form a parallel coolant-channels configuration. The separate coolant channels 62a and 62b may e.g. be machined in the bipolar plate 80 to allow the coolant 68 to flow through the channels of the fluid circuit 60 so as to remove the heat from the fuel cell arrangement 23. The coolant channels 62a, 62b may generally be created by drilled grooves. In some instances, the bipolar plate 80 comprises internal coolant channels 62a, 62b, as illustrated in Figs. 3 - 4. In other instances, the coolant channels 62a, 62b are arranged on the surface of the bipolar plate facing the PEM 50, as illustrated in e.g. Fig. 2. While the overall system design of the coolant channels 62a and 62b can be designed in a simple manner so as to only include two individual circulation paths 62a and 62b, as illustrated in Figs. 3 and 4, it may likely be designed with additional number of coolant channels arranged in each bipolar plate 80, such as three, four or even further coolant channels. As will be further appreciated from the following description of the coolant channels 62, the arrangement of having integrated separate coolant channels 62, 62a, 62b provides for an improved temperature control, which is needed to accurately maintain the temperature of the fuel cell arrangements, and thus the fuel cell stack, within a selected range.

Moreover, as schematically illustrated in Fig. 2 and also in e.g. Fig. 3, the cross-sectional dimension of one coolant channel is substantially constant along the extension of the coolant channel across the bipolar plate 80. Moreover, the cross-sectional dimensions of the coolant channels are substantially the same for all coolant channels of the parallel coolant-channels configuration. Also, the distribution and extension of the coolant channels are substantially the same for all coolant channels, as illustrated in e.g. Fig. 3. However, it may also be conceivable to vary the distribution, extensions and dimensions of the coolant channels to some extent.

Turning now again to Fig. 4, which schematically illustrates the arrangement of the fluid circuit 60 in relation to one bipolar plate 80 of the number of bipolar plates 80 in Fig. 3, the bipolar plate 80 defines a bipolar plate cell portion 82 having a surface 83 facing the PEM 50 (i.e. facing a fuel cell). The bipolar plate cell portion 82 should at least extend over or correspond to the active surface of the fuel cell. Moreover, the fluid circuit 60 comprises the parallel coolant-channels configuration having the plurality of coolant channels 62a and 62b for transporting the coolant 68 across the bipolar plate cell portion 82, see e.g. Figs 2 to 4. The plurality of coolant channels 62a and 62b are here arranged in thermal contact with a cell surface of the PEM 50, see Fig. 2. In Fig. 2, the coolant channels are drilled straight through from a supply manifold to a collection manifold (although not shown in Fig. 2). The plurality of coolant channels 62a and 62b may be arranged in direct or indirect thermal contact with the cell surface, e.g. arranged on the other side of the bipolar plate 80, while still being able to dissipate heat from the PEM 50 via conductive thermal management. Hence, heat is transferred over the bipolar plate, i.e. from anode/cathode (gas to solid), across the bipolar plate to the coolant (solid to liquid). In other words, the plurality of coolant channels 62a and 62b should at least have one surface facing toward the PEM 50 so as to allow the coolant 68 to transport heat away from the PEM 50 when the coolant 68 flows through the plurality of coolant channels 62a and 62b. In Fig. 2, the plurality of coolant channels 62a and 62b are arranged opposed and in contact with a cell surface of the PEM 50. Fig. 2 only illustrate one conceivable example of how to arrange the coolant channels in relation to the PEM for handling generated heat in the fuel cell arrangement.

Further, the coolant channels 62a and 62b are here arranged on the surface 83 of the bipolar plate 80, as shown in e.g. Fig. 2 or Fig. 3. Hence, in this type of fuel cell stack 22, two set of coolant channels 62a and 62b of two consecutive bipolar plates 80 are arranged in-between two opposite facing surfaces of the consecutive bipolar plates 80, while the PEM 50 is arranged in-between these two opposite set of coolant channels 62a and 62b, which may be gleaned from the arrangement illustrated in Fig. 2.

It should be noted that the coolant channels 62a and 62b can be provided in several different ways. In the example embodiment described in relation to Figs. 2 to 4, the individual bipolar plates 80 are fabricated from e.g. corrugated metal and the coolant channels 62a and 62b are defined in an appropriate manner by the pattern of the corrugated surface of the bipolar plate. To this end, the coolant channels 62a and 62b are an integral part of the bipolar plate 80. That is, the bipolar plate 80 comprises the coolant channels 62a and 62b. Alternatively, or in addition, the coolant channels 62a and 62b can be disposed on a relatively smoot surface of the bipolar plate 80, in which the coolant channels 62a and 62b are provided in the form of grooves, tubes, pre-defined hoses or the like, that are milled into the metal/graphite bipolar plate. Alternatively, or in addition, the coolant channels can be machined into the bipolar plate at the manufacturing of the bipolar plate.

As illustrated in Figs. 3 and 4, each one of the coolant channels 62a and 62b is provided in the form of a predefined groove arranged in a certain pattern along the outer surface 83 of the bipolar plate 80. By way of example, as illustrated in Fig. 3, each one of the coolant channels 62a and 62b is arranged in a serpentine pattern. Other patterns are likewise conceivable depending on shape and size of the bipolar plate and the PEM. In other words, the coolant channels 62a and 62b of the fluid circuit 60 may either be defined by the material of the bipolar plate 80, such as by corrugated surfaces as in Fig. 2, or by pre-defined grooves arranged as integral parts of the bipolar plate 80, as illustrated in Figs. 3 and 4.

In order to provide an improved thermal management of the PEM 50, each one of the plurality of coolant channels 62a and 62b comprises corresponding coolant inlets 63a and 63b. In addition, each one of the plurality of coolant channels 62a and 62b comprises corresponding coolant outlets 64a and 64b, as illustrated in e.g. Figs. 3 and 4. As such, each one of the plurality of coolant channels 62a and 62b has a corresponding coolant inlet 63a and 63b to the fuel cell and a corresponding coolant outlet from the fuel cell. Accordingly, each one of the plurality of coolant channels 62a and 62b defines corresponding individual coolant flow paths.

As illustrated in e.g. Figs. 3 and 4, the parallel arrangement of the coolant channels 62a and 62b relative to the heat exchanger 70 allows for coolant 68 to flow from the heat exchanger 70 to each one of the coolant inlets 63a and 63b without being transported through another one of the coolant channels. Similarly, coolant will flow from each one of the coolant outlets 64a and 64b to the heat exchanger 70 without being transported through another one of the coolant channels. By way of example, a first portion of coolant 68 is transferred to the first coolant inlet 63a of the first coolant channel 62a and out from the first coolant outlet 64a of the first coolant channel 62a to the heat exchanger 70 without being transported through the second coolant channel 62b. Analogously, a second portion of coolant 68 is transferred to the second coolant inlet 63b of the second coolant channel 62b and out from the second coolant outlet 64b of the second coolant channel 62b to the heat exchanger 70 without being transported through the first coolant channel 62a. Such arrangement of the coolant system 100 may thus not need any intermediate heat exchanger in-between the two coolant channels. This arrangement may, however, not be restricted to a number of two coolant channels, but may likewise include additional coolant channels with corresponding coolant inlets and coolant outlets in fluid communication with the heat exchanger 70.

Moreover, in the example embodiment illustrated in Figs. 2 to 4, the corresponding coolant inlets 63a and 63b are arranged in direct fluid communication with the heat exchanger 70, while the corresponding coolant outlets 64a and 64b are arranged in direct fluid communication with the same heat exchanger 70. Thus, the system comprises one single heat exchanger, only. To this end, each one of the coolant outlets 64a and 64b, and thus each one of the coolant channels 62a and 62b is in fluid communication with the heat exchanger 70 via an unobstructed fluid passageway connecting the individual coolant outlets 64a and 64b to the heat exchanger 70, as is e.g. illustrated in Fig. 4. In other words, each one of the corresponding coolant inlets 63a and 63b are arranged in fluid communication with the heat exchanger 70 such that the coolant 68 is capable of being transported from the heat exchanger 70 to each one of the coolant inlets 63a and 63b without coolant being transported through another one of the coolant channels of the parallel coolant-channels arrangement. Analogously, each one of the corresponding coolant outlets 64a and 64b are here arranged in fluid communication with the heat exchanger 70. Hence, the coolant 68 is allowed to flow from each one of the coolant outlets 64a and 64b to the heat exchanger 70 without coolant being transported through another one of the coolant channels, as illustrated in Fig. 4.

Further, as illustrated in e.g. Figs. 3 and 4, the heat exchanger 70 generally comprises an outlet 71 for transporting the coolant 68 to the fluid circuit 60. In addition, the heat exchanger comprises an inlet 72 for receiving the coolant 68 from the fluid circuit 60. Optional, the coolant channels 62a and 62b intersect into a common return flow path 65 to the heat exchanger 70, as illustrated in Fig. 4. By way of example, the coolant outlets 64a and 64b insect into the common return flow path 65 to the heat exchanger 70. The coolant outlets 64a and 64b generally insect into the common return flow path 65 at an end side of the bipolar plate. However, the coolant outlets 64a and 64b may likewise insect into the common return flow path 65 just outside the bipolar plate.

Analogously, at the inlet side of the coolant channels 62a and 62b, the coolant inlets 63a and 63b are typically arranged in fluid communication with a common entrance flow path 69 which is in fluid communication with the outlet 71 of the heat exchanger 70, as illustrated in e.g. Fig. 4. In this type of coolant system, the flow of coolant 68 into the coolant channels 62a and 62b is regulated so that the mass flow of coolant is substantially the same in both of the coolant channels 62a and 62b. Another option of controlling the mass flow of coolant will be described in relation to Fig. 5.

If the fuel cell arrangement 23 comprises a number of bipolar plates 80, as illustrated in Fig. 3, each one of the bipolar plates 80 comprises a parallel coolant-channels configuration having a plurality of coolant channels 62a and 62b, the corresponding coolant outlets 64a are generally aligned by a common outlet conduit 98a and the corresponding coolant outlets 64b are aligned by a corresponding common outlet conduit 98b, respectively, that subsequently intersect into the common return flow path 65 to the heat exchanger 70. The common return flow path 65 is further arranged in fluid communication with the heat exchanger inlet 72 of the heat exchanger 70.

Analogously, if the fuel cell arrangement 23 comprises a number of bipolar plates 80, and each one of the bipolar plates 80 comprises a plurality of separate coolant channels 62a and 62b, the corresponding coolant inlets 62a are generally aligned by a common inlet conduit 96a and the corresponding coolant inlets 62b are generally aligned by a corresponding common inlet conduit (not shown in Fig. 4), respectively, that are in fluid communication with the common entrance flow path 69.

Turning now to the control of the coolant system 100, the fuel cell system 20 here also comprises a control unit 90, as illustrated in Fig. 1. By way of example, the control unit 90 is an integral part of the coolant system 100. The control unit 90 is adapted to control the coolant system 100 in response to a temperature of the fuel cell arrangement 23.

In another example embodiment, as illustrated in Fig. 5, there is provided a fuel cell arrangement 23 and a coolant system 100 as described in relation to Figs. 2 to 4, which further comprises a flow control system 75. The fuel cell arrangement 23, and the coolant system 100, in Fig. 5 here comprises all features and components as described in relation to Figs. 2 to 4 besides that the fluid circuit 60 further comprises the flow control system 75. In this example embodiment, the control unit 90 is arranged in communication with the flow control system 75 for regulating the coolant mass flow to the parallel coolant-channels configuration. The flow control system 75 comprises one or more coolant flow controllers 73, 73a, 73b. The coolant flow controllers 73, 73a, 73b are disposed in the fluid circuit 60 and upstream the parallel coolant-channels configuration. As illustrated in Fig. 5, the coolant system 100 comprises corresponding coolant flow controllers arranged in the fluid circuit 60 upstream of the corresponding inlets of the coolant channels 62a and 62b. Typically, although strictly not necessary, there is disposed one coolant flow controller 73 upstream each one of the coolant channels. By way of example, when the parallel coolant-channels configuration comprises two coolant channels, the coolant system 100 comprises first and second coolant flow controllers 73a and 73b arranged upstream of the inlets 63a to 63b of the coolant channels 62a and 62b, respectively. Also, as illustrated in Fig. 5, each one of the coolant flow controllers 73a and 73b is arranged downstream the outlet 71 of the heat exchanger 70. By way of example, each one of the coolant flow controllers 73a and 73b is a control valve.

It should be noted that the fluid circuit 60 is here split into a number of flow paths 61a and 61b corresponding to the number of coolant channels of the parallel coolant-channels configuration. Accordingly, in each one of the flow paths, there is disposed a coolant flow controller 73a and 73b upstream the corresponding inlets 63a to 63b of the coolant channels 62a to 62b. Each one of the coolant flow controllers 73a and 73b is arranged to regulate the coolant mass flow of the coolant 68 to the corresponding coolant channels 62a to 62b. More specifically, the coolant flow controller 73a is arranged to control the coolant mass flow to the coolant inlet 63a of the coolant channel 62a and the coolant flow controller 73b is arranged to control the coolant mass flow to the coolant inlet 63b of the coolant channel 62b. In addition, the flow control system 75 further comprises the pump 74 for controlling the mass flow in the fluid circuit in cooperation with the coolant flow controllers 73a and 73b so as to regulate the coolant mass flow to the coolant channels 62a and 62b. The pump 74 is disposed in the fluid circuit 60 and arranged upstream the coolant flow controllers 73a and 73b. Further, the pump 74 is generally arranged downstream the heat exchanger 70 and in the common entrance flow path 69.

It should be appreciated that it may not strictly be necessary with arranging a corresponding coolant flow controller upstream each and every coolant inlet to regulate the coolant mass flow to the parallel coolant-channels configuration. In some example embodiments, it may suffice with having one single coolant flow controller disposed upstream one of the coolant inlets of the coolant channels.

By means of the coolant flow control system 75, it becomes possible to regulate the coolant mass flow to each one of the coolant inlets 63a to 63b of the coolant channels 62a to 62b. By way of example, the coolant flow control system 75 can open and close the control valve so as to permit or restrict a flow of coolant to a given coolant channel. It may also be possible to linearly control the flow of coolant to a given coolant channel by the flow control system.

By way of example, the coolant mass flow to each one of the coolant inlets 63a to 63b of the coolant channels 62a to 62b is individually regulated based on a desired target coolant temperature at the coolant outlets 64a to 64b of the coolant channels 62a to 62b. The target coolant temperature may either be set according to a predetermined temperature value stored in a memory of the control unit 90 or be determined during the operation of the fuel cell system 20 and stored in the memory of the control unit 90. Other ways of determining the target coolant temperature may also be readily conceivable. In this manner, it becomes possible to provide a coolant system 100 in which the mass flow of coolant can be regulated in the coolant channels 62a to 62b. By controlling the mass flow of coolant individually in each one of coolant channels 62a to 62b, it becomes possible to provide an increased cooling at the hydrogen gas inlet of the fuel cell and a reduced cooling at the hydrogen gas outlet of the fuel cell. Thereby, it becomes possible to provide a more homogenous catalyst charging along the hydrogen gas channels of the fuel cell.

Moreover, the coolant temperature demand will be decreased and the fuel cell efficiency will be increased, which allows for reducing dimensions of the heat-exchanger (i.e. the radiator of the vehicle). This is at least partly derivable from the thermal energy equation over the heat exchanger (and/or the radiator), which is:

$$Q = m * Cp * dT$$

wherein,

$Q$ = heat [kW]
$Cp$ = specific heat capacity [kJ/kg/°C], i.e. a thermodynamic property specific of the fluid used to transfer heat
$m$ = mass flow rate [kg/s], i.e. amount of coolant flowing around the coolant loop
$dT$ = temperature difference [°C], i.e. difference in temperature before and after heat transfer

It should also be readily appreciated that $dT$ may be determined by the temperature difference T2 - T1, as described below in relation to Figs. 4 and 5, wherein T1 is the temperature at an inlet of an coolant channel and T2 is the temperature at an outlet of the corresponding coolant channel.

By means of the example embodiment of the coolant system, it becomes possible to lower dT by increasing the mass flow, m, of the coolant, while Q is controlled to be remained constant. In other words, the coolant system with the parallel coolant channels configuration allows for an optimization of the coolant loop by using a high mass flow rate and a low temperature difference. It should be noted that the above reasoning typically assume that the heat exchanger/radiator is designed so that the system can cope with a higher mass flow without being saturated.

Typically, the control unit 90 is configured to determine a coolant temperature difference, T2 - T1, between one of the coolant outlets 64a and 64b and a corresponding coolant inlet 63a and 63b. The control unit may subsequently be configured to regulate or control the mass flow of the coolant 68 to the coolant channels 62a and 62b based on the determined difference between the coolant outlet temperature T2 and the coolant inlet temperature T1. In this manner, the control unit 90 is arranged to operate the coolant system 100 so as to minimize the temperature difference between the temperature at the coolant outlet and the temperature at the coolant inlet by controlling the mass flow of the coolant flow to the coolant channels 62a and 62b. The temperatures of the coolant in the fluid circuit 60, including the coolant inlet temperature T1 and the coolant outlet temperature T2, are typically monitored and determined by means of one or more temperature sensors (not shown) disposed at an appropriate position in the coolant system 100. By way of example, the coolant inlet temperature T1 to the coolant channels is about 68 to 72 degrees Celsius and the coolant outlet temperature T2 from the coolant channels is about 80 degrees Celsius. The outlet coolant temperature should generally be maximized for maximum efficiency without damaging the components and system. Generally, the coolant mass flow to each one of the coolant inlets 63a to 63b of the coolant channels 62a to 62b is regulated to a common value for both channels based on a desired target coolant temperature at the coolant outlets 64a to 64b of the coolant channels 62a to 62b. In some example, the coolant temperature may be controlled according to a pre-set value stored in the control unit 90.

It should also be readily appreciated that the control unit 90 can be a part of an electronic control unit (ECU) for controlling the vehicle and various parts of the vehicle. In particular, the control unit 90 is arranged in communication with the fuel cell system 20 and the coolant system 100. It may also be conceivable that the coolant system 100 itself comprises the control unit 90 configured to allow control of the coolant pressure and mass flow rate in the coolant system and to allow control of a flow of coolant into the coolant channels 62a and 62b by controlling the pump operatively connected to the coolant system. It should be noted that the precise control of the coolant flows depends on the particular application and the particular operation conditions.

In addition, or alternatively, the coolant mass flow to each one of the inlets 63a to 63b of the coolant channels 62a to 62b is regulated based on a prevailing load of the fuel cell system 20 of the vehicle. In addition, or alternatively, the coolant mass flow to each one of the inlets 63a to 63b of the coolant channels 62a to 62b is regulated based on a change of load of the fuel cell system 20 of the vehicle. The load as well as a change in load can be monitored and determined in several different ways.

In addition, or alternatively, the coolant mass flow to each one of the inlets 63a to 63b of the coolant channels 62a to 62b is regulated based on the thermal energy capacity of the heat exchanger 70, as measured downstream the outlets 64a to 64b of the coolant channels 62a to 62b.

As mentioned above, the present disclosure provides a coolant system and a fuel cell arrangement capable of increasing the mass flow of the coolant flow upstream the parallel coolant channels configuration so as to allow for an increased coolant temperature at the inlets 63a and 63b, while not exceeding the optimal (target) outlet temperature at the outlets 64a and 64b. Hereby, it becomes possible to increase the efficiency of the fuel cell. Further, it becomes possible to provide a more efficient cooling of the fuel cells without increasing the effective area of the heat exchanger arranged downstream the outlets of the at least two coolant channels. The coolant system can be incorporated into a fuel cell stack 22 for a vehicle, such as an electric vehicle. In this type of application, the fuel cell stack 22 comprises at least one fuel cell arrangement 23 having one or more bipolar plates 80 and the coolant system 100 for cooling at least a part of an active surface of the fuel cell arrangement. As schematically illustrated in Fig. 1, the fuel cell stack 22 generally comprises a number of fuel cell arrangement 23, wherein the number of fuel cell arrangement are arranged in a stack, each one of the fuel cell arrangements having a corresponding coolant system 100. Hence, the coolant system may be used both for a single fuel cell arrangement or in combination with a number of fuel cell arrangements forming a fuel cell stack.

It is to be understood that the present disclosure is not limited to the embodiments described above and illustrated in the drawings; rather, the skilled person will recognize that many changes and modifications may be made within the scope of the appended claims.

## Claims

1. A coolant system (100) for a fuel cell arrangement (23), comprising a fluid circuit (60) for transporting coolant and a heat exchanger (70) disposed in said fluid circuit for regulating the temperature of the coolant, wherein said fluid circuit comprises a plurality of coolant channels (62a, 62b) forming a parallel coolant-channels configuration for transporting the coolant over a portion of a bipolar plate (80), the plurality of coolant channels having corresponding coolant inlets to the fuel cell arrangement and corresponding coolant outlets from the fuel cell arrangement, respectively, and wherein the corresponding coolant inlets are arranged in fluid communication with the heat exchanger and the corresponding coolant outlets are arranged in fluid communication with the heat exchanger.

2. Coolant system according to claim 1, further comprising a coolant flow control system (75) arranged to regulate the coolant mass flow to the parallel coolant-channels configuration.

3. Coolant system according to claim 2, wherein the coolant flow control system comprises at least one flow controller (73, 73a, 73b) disposed in the fluid circuit upstream relative to at least one of the coolant inlets of a corresponding coolant channel and a pump (84) disposed in the fluid circuit upstream the at least one flow controller.

4. Coolant system according to claim 3, wherein the flow control system comprises a plurality of flow controllers (73, 73a, 73b) disposed in the fluid circuit upstream of the corresponding coolant inlets of the coolant channels, respectively, and said pump (84) being disposed in the fluid circuit upstream of the plurality of flow controllers, whereby the flow control system is configured to control the coolant mass flow to each one of the coolant inlets of the coolant channels.

5. Coolant system according to claims 3 to 4, wherein the flow controller is a control valve.

6. Coolant system according to any one of the claims 2 to 5, wherein the coolant mass flow to each one of the coolant inlets of the coolant channels is regulated based on a target coolant temperature at the coolant outlets of the coolant channels.

7. Coolant system according to any one of the claims 2 to 6, wherein the coolant mass flow to each one of the coolant inlets of the coolant channels is regulated based on the thermal energy capacity of the heat exchanger, as measured downstream the coolant outlets of the coolant channels.

8. Coolant system according to any one of the preceding claims, wherein the coolant outlets intersect into a common return flow path to the heat exchanger.

9. Coolant system according to any one of the preceding claims, further comprising a control unit (90) adapted to control said coolant system in response to a temperature of the fuel cell arrangement.

10. A fuel cell arrangement (23) for an electric vehicle, comprising a bipolar plate (80) and a coolant system (100) according to any one of the claims 1 to 9.

11. A fuel cell stack (22) comprising a number of fuel cell arrangements (23) according to claim 10, wherein the fuel cell arrangements are arranged in a stack configuration.

12. A vehicle, preferably an electric vehicle, comprising a coolant system according to any one of claims 1 to 9, and/or a fuel cell arrangement according to claim 10.

Fig. 1

EP 4 068 437 A1

Fig. 2

Fig. 3

Fig. 4

Fig. 5

Europäisches
Patentamt

European
Patent Office

Office européen
des brevets

# EUROPEAN SEARCH REPORT

Application Number

EP 21 16 6703

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 579 373 A1 (HONDA MOTOR CO LTD [JP]) 10 April 2013 (2013-04-10) * paragraphs [0029] - [0114]; figures 1-15 * | 1-12 | INV. H01M8/04029 H01M8/04007 H01M8/0432 H01M8/04701 H01M8/04746 H01M8/0206 |
| X | DE 103 03 761 A1 (DENSO CORP [JP]) 7 August 2003 (2003-08-07) * paragraphs [0050] - [0107]; figures 1-33 * | 1-12 | |
| X | GB 2 525 697 A (DAIMLER AG [DE]) 4 November 2015 (2015-11-04) * page 1, line 8 - page 14, line 2; figures 1-6 * | 1-12 | |
| A | DE 10 2018 117266 A1 (FORD GLOBAL TECH LLC [US]) 24 January 2019 (2019-01-24) * the whole document * | 1-12 | |
| A | US 2006/172164 A1 (KUDO HIROYASU [JP]) 3 August 2006 (2006-08-03) * the whole document * | 1-12 | TECHNICAL FIELDS SEARCHED (IPC) H01M |

The present search report has been drawn up for all claims

| Place of search | Date of completion of the search | Examiner |
|---|---|---|
| Munich | 16 September 2021 | Brune, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 16 6703

This annex lists the patent family members relating to the patent documents cited in the above-mentioned European search report.
The members are as contained in the European Patent Office EDP file on
The European Patent Office is in no way liable for these particulars which are merely given for the purpose of information.

16-09-2021

| Patent document cited in search report | | Publication date | Patent family member(s) | | Publication date |
|---|---|---|---|---|---|
| EP 2579373 | A1 | 10-04-2013 | CN | 102918695 A | 06-02-2013 |
| | | | EP | 2579373 A1 | 10-04-2013 |
| | | | JP | 5642172 B2 | 17-12-2014 |
| | | | JP | WO2011155286 A1 | 01-08-2013 |
| | | | US | 2013078543 A1 | 28-03-2013 |
| | | | WO | 2011155286 A1 | 15-12-2011 |
| DE 10303761 | A1 | 07-08-2003 | DE | 10303761 A1 | 07-08-2003 |
| | | | JP | 4140355 B2 | 27-08-2008 |
| | | | JP | 2004165101 A | 10-06-2004 |
| GB 2525697 | A | 04-11-2015 | DE | 102015015229 A1 | 02-06-2016 |
| | | | GB | 2525697 A | 04-11-2015 |
| DE 102018117266 | A1 | 24-01-2019 | CN | 109273739 A | 25-01-2019 |
| | | | DE | 102018117266 A1 | 24-01-2019 |
| | | | US | 2019027766 A1 | 24-01-2019 |
| US 2006172164 | A1 | 03-08-2006 | JP | 4835001 B2 | 14-12-2011 |
| | | | JP | 2006216367 A | 17-08-2006 |
| | | | US | 2006172164 A1 | 03-08-2006 |

EPO FORM P0459

For more details about this annex : see Official Journal of the European Patent Office, No. 12/82

**EP 4 068 437 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6461754 B1